# EUROPEAN PATENT APPLICATION

(11) **EP 4 197 988 A1**
(43) Date of publication of application: **21.06.2023**
(21) Application number: 22213436.3
(22) Date of filing: 14.12.2022
(51) Int. Cl.: C04B 35/638, C04B 35/80

(54) **FREEZE DRYING OF COMPOSITES FOR FILAMENT SPREADING**

(30) Priority: 17.12.2021 US 202163291080 P
(71) Applicant: Raytheon Technologies Corporation, Farmington, CT 06032 (US)
(72) Inventor: ENOS, Shaun M., East Hartford, 06118 (US); READ, Kathryn S., East Hartford, 06118 (US); BEALS, James T., East Hartford, 06118 (US); FERNANDEZ, Robin H., East Hartford, 06118 (US); HOLOWCZAK, John E., East Hartford, 06118 (US)
(74) Representative: Dehns

(57) **Abstract**

A method of spreading fiber tows includes assembling a fibrous composite from a plurality of tows, applying an aqueous solution to the fibrous composite, freezing the fibrous composite after applying the aqueous solution, freeze drying the fibrous composite to remove water from the fibrous composite, and heating the fibrous composite after freeze drying to remove a cryoprotectant from the fibrous composite. The aqueous solution comprises water and the cryoprotectant and freezing the fibrous composite spreads filaments within the plurality of fiber tows.

## Description

### BACKGROUND

The present disclosure relates to ceramic matrix composites, and more particularly, to the preparation of woven ceramic fabrics for use in ceramic matrix composites.

In the processing of ceramic matrix composites (CMCs), there is a need to infiltrate matrix within and around tows. In a woven CMC system, pores or voids through which matrix can infiltrate can be non-uniform in size. This non-uniformity of pore size can reduce the uniformity of infiltration, potentially resulting in defects in the resulting CMC components.

### SUMMARY

From one aspect, there is provided a method of spreading fiber tows that includes assembling a fibrous composite from a plurality of tows, applying an aqueous solution to the fibrous composite, freezing the fibrous composite after applying the aqueous solution, freeze drying the fibrous composite to remove water from the fibrous composite, and heating the fibrous composite after freeze drying to remove a cryoprotectant from the fibrous composite. The aqueous solution comprises water and the cryoprotectant and freezing the fibrous composite spreads filaments within the plurality of fiber tows.

There is also provided a method of manufacturing a ceramic matrix composite includes forming a fiber preform, applying an aqueous solution to a fiber preform, freezing the fiber preform after applying the aqueous solution, freeze drying the fiber preform to remove water from the fiber preform, heating the fiber preform to remove a cryoprotectant from the fiber preform after freeze drying, and densifying the fiber preform after heating the fiber preform. The aqueous solution comprises water and the cryoprotectant. The fiber preform comprises a plurality of fiber tows and freezing the fiber preform spreads filaments within the plurality of fiber tows.

A fibrous composite is formed according to the methods above.

A ceramic matrix composite component manufactured according the methods above is also provided.

Features of embodiments are set forth in embodiments.

### BRIEF DESCRIPTION OF THE DRAWINGS

FIG. 1 is a schematic diagram of an example of a microstructure of a fabric having tightly packed fiber tows.
FIG. 2 is a flow diagram of a method of spreading fabric tows.
FIG. 3 is a schematic diagram of the microstructure of the fabric of FIG. 1 following tow spreading with the method of FIG. 2.

### DETAILED DESCRIPTION

The present disclosure includes systems and methods of spreading the fabric tows using freeze drying techniques. The systems and methods disclosed herein advantageously allow for improved uniformity of densification of fabric structures, improving various characteristics of resulting CMC components. Further, the systems and methods disclosed herein advantageously allow for tow spreading of woven fabrics, such as woven fabric sheets, preforms, woven fabric tapes, and/or components having unidirectional fabric tows.

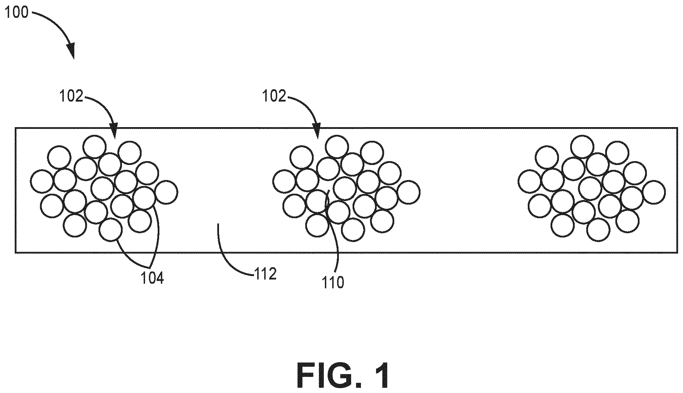

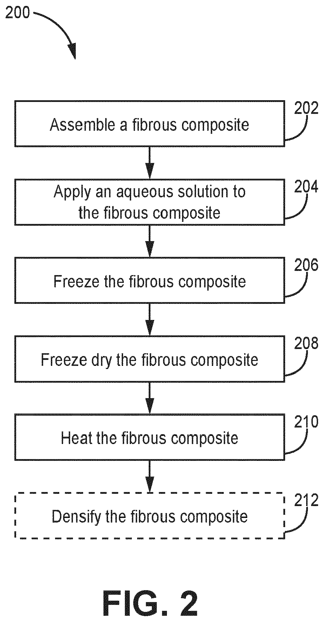

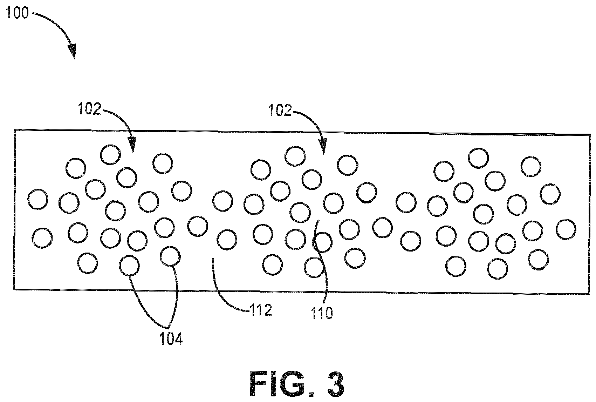

FIG. 1 is a schematic drawing of fibrous composite 100, which has a microstructure that includes tightly packed fiber tows. Fibrous composite 100 is formed from tows 102, which include filaments 104. Tows 102 include intra-tow regions 110 and inter-tow regions 112. FIG. 2 is a flow diagram of method 200, which is a method of spreading fiber tows of a fibrous composite and includes steps 202-212. FIG. 3 is a schematic a schematic diagram of the microstructure of fibrous composite 100 following tow spreading with method 200. FIGS. 1-3 will be discussed together.

Fibrous composite 100 can have a woven, braided, or unidirectional structure, among other options. Tows 102 of fibrous composite 100 can be arranged in various woven architectures such as plain, harness (e.g., 3, 5, 8, etc.), twill, or non-symmetric, among other examples. In other examples, fibrous structure 100 can adopt other shapes and/or forms, such as braided fabric structures, fibrous preforms, three-dimensional fabric structures, multilayer fabrics, individual fiber tows, or unidirectional fiber materials. Fibrous structure 100 can further be, for example, a fabric tape. Where fibrous structure 100 is formed as a braided structure of tows 102, the braided structure can be, for example, a biaxial or triaxial braid and can be formed on, for example, a mandrel. Additionally and/or alternatively, fibrous structure 100 can be a three-dimensional fibrous structure, such as a three-dimensional fabric preform. Tows 102 are bundles of filaments 104, which are made of a ceramic material. The ceramic material can be, for example, silicon carbide or another suitable material. Intra-tow regions 110 are regions within a given tow 102 and inter-tow regions 112 are regions between adjacent tows 102.

As shown in FIG. 1, the pore size of fibrous composite 100 follows a bimodal distribution, with the pore size of intra-tow regions 110 forming a first mode of the bimodal distribution and the pore size of inter-tow regions 112 forming the second mode of the bimodal distribution. The pore size of intra-tow regions 110 is defined by the spacing between filaments 104 of tows 102, while the pore size of inter-tow regions 112 is defined by the spacing of tows 102 in the weave of fibrous composite 100. In typical fibrous composites, the pore size of intra-tow regions 110 is substantially smaller than the pore size of inter-tow regions 112.

Fibrous composite 100 can undergo matrix formation and densification using a chemical vapor infiltration (CVI) process, a chemical vapor deposition (CVD) process, a polymer infiltration and pyrolysis process (PIP), a melt infiltration process (MI), or a combination of two or more of CVI, CVI, PIP, and MI. Using CVI as an example, during densification, tows 102 are infiltrated by reactant vapors and a ceramic matrix is disposed on the filaments 104 of tows 102. The resulting matrix material can be a silicon carbide or other suitable ceramic material. Densification is carried out until the resulting CMC has reached the desired residual porosity.

The pore size of intra-tow regions 110 and inter-tow regions 112 has a significant effect on densification uniformity of fibrous composite 100. In particular, the bimodal distribution of pore sizes shown in FIG. 1, with relatively small pore sizes in intra-tow region 110 and relatively large pore sizes in inter-tow regions 112, significantly reduces the uniformity of densification of fibrous composite 100. Improving the uniformity of densification of woven fiber sheet 100 advantageously improves a number of properties of the resulting CMC. For example, improving densification uniformity can improve the strength and/or decrease the overall porosity of the resulting CMC. Further, where compaction is used during CMC fabrication to increase density and to increase the homogeneity of the density of the CMC, tightly packed inter-tow regions 112 can cause spring-back, disadvantageously reducing CMC density following compaction.

Method 200 includes steps of assembly a fibrous composite (step 202), applying an aqueous solution to the fibrous composite (step 204), freezing the fibrous composite (step 206), freeze drying the fibrous composite (step 208), heating the fibrous composite (step 210), and densifying the fibrous composite (step 212). As will be explained in more detail subsequently, method 200 advantageously improves spreading of tows of a fibrous composite, which allows the fibrous composite to be densified more uniformly.

In step 202, fibrous composite 100 is assembled. As described previously, fibrous composite 100 is assembled from tows 102 arranged in, for example, a braided, woven, or unidirectional structure. Fibrous composite 100 can in some examples be a three-dimensional preform, a woven fabric sheet, or a fabric tape. As assembled in step 202, intra-tow regions 110 and inter-tow regions 112 have the pore sizes shown in FIG. 1.

In step 204, an aqueous solution is applied to fibrous composite 100. The aqueous solution can be applied using any suitable technique capable of introducing the aqueous solution to intra-tow regions 110. For example, the aqueous solution can be applied by vacuum infiltration, by immersing fibrous composite 100 in the aqueous solution, or by spraying the aqueous solution onto fibrous composite 100, among other options.

The aqueous solution can include a cryoprotectant and/or a binder dissolved in water. The cryoprotectant functions to control grain growth of ice crystals in fibrous composite 100 during step 206 of method 200. The cryoprotectant can be, for example, urea or dimethyl sulfoxide (DMSO). The binder helps to keep fibers of the fibrous composite spread apart following freeze drying in step 206, as will be explained in more detail subsequently. The binder can be, for example, polyvinyl alcohol (PVA). In most embodiments the aqueous solution does not include an inorganic component.

In step 206, the fibrous composite is frozen. Step 206 is performed after step 204, such that freezing fibrous composite 100 causes the aqueous solution applied in step 204 to freeze. As the aqueous solution freezes, it expands and forms ice crystals, thereby spreading tows 102 by forcing filaments 104 apart and increasing the pore size in intra-tow regions 110. Spreading tows 102 increases the homogeneity of the structure of fibrous composite 100 and improves the uniformity of densification in step 210.

In at least some examples, tow spreading of fibrous composite 100 does not substantially change the overall the ends-per-inch (EPI) and/or picks-per-inch (PPI) of fibrous composite 100. Rather, tow spreading of fibrous composite 100 only affects the relative spacing of tows 102 and/or filaments 104. In other examples, however, tow spreading can be used to increase the PPI and/or EPI of fibrous composite 100.

The cryoprotectant in the aqueous solution applied in step 204 functions to prevent and control grain growth of the ice crystals formed in step 206. Controlling grain growth promotes the formation of smaller crystals and helps to prevent frost heave, in which portions of fibrous composite 100 swell or expand due to formation of large ice crystals. Advantageously, controlling grain growth of ice crystals improves homogeneity of fibrous composite 100 following tow spreading.

The binder in the aqueous solution forms a porous three-dimensional network both between and within tows 102. After water from the aqueous solution is removed, the network formed by binder in the aqueous solution is maintained and helps to keep filaments 104 of tows 102 spread. Advantageously, this promotes the homogeneity of fibrous composite 100 following tow spreading and thereby improves densification uniformity in step 212.

In step 208, fibrous composite 100 is freeze dried. Freeze drying fibrous composite 100 removes frozen water from fibrous composite 100 through sublimation. Freeze drying fibrous composite 100 to remove water offers a number of advantages over evaporative drying. Notably, freeze drying of fibrous composite 100 preserves the porous three-dimensional network created by the binder in step 206. The porous three-dimensional network created by the binder functions to hold filaments 104 apart during sublimation, advantageously preserving the separation between filaments 104 created in step 206. Conversely, evaporative drying of fibrous composite 100 forms liquid water, which can dissolve the three-dimensional network created during step 206. Binder may not present between filaments 104 within intra-tow regions 110 as the liquid water is evaporated and, therefore, cannot hold filaments 104 apart during evaporative drying. Further, capillary forces can increase aggregation of the filaments 104 of tows 102 during evaporate drying, in some cases causing filaments 104 pack more tightly than prior to freezing. For the foregoing reasons, freeze drying of fibrous composite 100 offers a number of advantages over evaporative drying. Freeze drying in step 208 can be performed using any suitable apparatus. For example, fibrous composite 100 can be placed under a vacuum while at freezing temperature to cause sublimation of the ice crystals formed in step 206.

Following freeze drying in step 208, cryoprotectant and binder remain in fibrous composite 100. In step 210, fibrous composite 100 is heated to burn off the cryoprotectant and binder remaining after step 208. In examples where the aqueous solution (i.e., the solution applied in step 204) does not include inorganic component, relatively low temperatures can be used to burn off cryoprotectant and binder from fibrous composite. For example, the cryoprotectant and binder can be burnt off at between 600F and 900F where the aqueous solution applied in step 204 does not include an inorganic component. Conversely, in examples where the aqueous solution includes an inorganic component, much higher temperatures can be required to burn off the inorganic component. The filaments 104 of fibrous composite 100 can be damaged or degraded at those higher temperatures. For example, temperatures in excess of 1200F (649 °C) can be required to burn off inorganic components. To this extent, including only organic components in the aqueous solution advantageously allows for lower temperatures to be used to burn off cryoprotectant and binder in step 210.

Alternatively, in some examples, the solution applied in step 204 can include inorganic components that are not burnt off in step 210. The inorganic component can be selected to, for example, aid in densification of fibrous composite 100 following step 210. The temperature to which fibrous composite 100 is heated in step 210 can be selected to be lower than the temperature at which an inorganic component burns off, allowing for removal of organic components of the aqueous solution and for the inorganic component to remain in intra-tow regions 110 of fibrous composite 100. As a specific example, the solution applied in step 204 can include silicon carbide particles.

Following step 210, substantially all components of the aqueous solution have been removed from fibrous composite 100 such that only filaments 104/tows 102 remain in fibrous composite 100. Notably, heating in step 210 does not cause compaction and/or aggregation of filaments 104, such that tows 102 remain spread following step 210. As such, fibrous composite 100 is suitable for densification following step 210.

FIG. 3 is a schematic diagram of the microstructure of fibrous composite 100 following tow spreading with method 200. Specifically, FIG. 3 depicts the microstructure of fibrous composite 100 following step 210 of method 200. As depicted in FIGS. 1 and 3, filaments 104 of tows 102 have increased separation following tow spreading with method 200. More specifically, following method 200, spacing in intra-tow regions 110 is increased and spacing in inter-tow regions 112 is decreased, increasing the overall homogeneity of the microstructure of fibrous composite 100. Advantageously, increasing the homogeneity of the microstructure of fibrous composite 100 improves the densification uniformity of fibrous composite 100. As described previously, improving the uniformity of densification of woven fiber sheet 100 advantageously improves a number of properties of the resulting CMC. For example, improving densification uniformity can improve the strength and/or decrease the overall porosity of the resulting CMC.

Returning to FIG. 2, method 200 optionally includes step 212, in which fibrous composite 100 is densified to produce a CMC. As described previously, fibrous composite 100 can undergo matrix formation and densification using a chemical vapor infiltration (CVI) process, a chemical vapor deposition (CVD) process, a polymer infiltration and pyrolysis process (PIP), a melt infiltration process (MI), or a combination of two or more of CVI, CVI, PIP, and MI. until the resulting CMC has reached the desired residual porosity. The resulting matrix material can be a silicon carbide or other suitable ceramic material.

### Discussion of Possible Embodiments

The following are non-exclusive descriptions of possible embodiments of the present invention.

An embodiment of a method of spreading fiber tows includes assembling a fibrous composite from a plurality of tows, applying an aqueous solution to the fibrous composite, freezing the fibrous composite after applying the aqueous solution, freeze drying the fibrous composite to remove water from the fibrous composite, and heating the fibrous composite after freeze drying to remove a cryoprotectant from the fibrous composite. The aqueous solution comprises water and the cryoprotectant and freezing the fibrous composite spreads filaments within the plurality of fiber tows.

The method of spreading fiber tows of the preceding paragraph can optionally include, additionally and/or alternatively, any one or more of the following features, configurations and/or additional components:
A method of spreading fiber tows according to an exemplary embodiment of this disclosure includes, among other possible things, assembling a fibrous composite from a plurality of tows, applying an aqueous solution to the fibrous composite, freezing the fibrous composite after applying the aqueous solution, freeze drying the fibrous composite to remove water from the fibrous composite, and heating the fibrous composite after freeze drying to remove a cryoprotectant from the fibrous composite. The aqueous solution comprises water and the cryoprotectant and freezing the fibrous composite spreads filaments within the plurality of fiber tows.

A further embodiment of the foregoing method of spreading fiber tows, wherein the aqueous solution further comprises a binder.

A further embodiment of any of the foregoing methods of spreading fiber tows, wherein heating the fibrous composite after freeze drying further comprises removing the binder from the fibrous composite.

A further embodiment of any of the foregoing methods of spreading fiber tows, wherein the binder comprises polyvinyl alcohol

A further embodiment of any of the foregoing methods of spreading fiber tows, wherein the fibrous composite consists essentially of the plurality of filaments following heating of the fibrous composite.

A further embodiment of any of the foregoing methods of spreading fiber tows, wherein heating the fibrous composite comprises heating the fibrous composite to a temperature between 600F (316 °C) and 800F (427 °C), or between 600F (316°C) and 900F (482 °C).

A further embodiment of any of the foregoing methods of spreading fiber tows, wherein the aqueous solution does not comprise inorganic material.

A further embodiment of any of the foregoing methods of spreading fiber tows, wherein the aqueous solution includes an inorganic component, wherein heating the fibrous composite after freeze drying does not remove the inorganic component.

A further embodiment of any of the foregoing methods of spreading fiber tows, wherein the cryoprotectant comprises urea.

A further embodiment of any of the foregoing methods of spreading fiber tows, wherein the cryoprotectant comprises dimethylsulfoxide.

A further embodiment of any of the foregoing methods of spreading fiber tows, further comprising densifying the fibrous composite following heating.

A further embodiment of any of the foregoing methods of spreading fiber tows, wherein the fibrous composite comprises a three-dimensional fibrous preform.

A further embodiment of any of the foregoing methods of spreading fiber tows, wherein applying the aqueous solution to the fibrous composite comprises vacuum infiltrating the aqueous solution into the fibrous composite.

A further embodiment of any of the foregoing methods of spreading fiber tows, wherein applying the aqueous solution to the fibrous composite comprises immersing the fibrous composite in the aqueous solution.

A further embodiment of any of the foregoing methods of spreading fiber tows, wherein applying the aqueous solution to the fibrous composite comprises spraying the aqueous solution onto the fibrous composite.

A further embodiment of any of the foregoing methods of spreading fiber tows, wherein applying the aqueous solution to the fibrous composite comprises spraying the aqueous solution onto the fibrous composite.

An embodiment of a fibrous composite formed according to any of the foregoing methods of spreading fiber tows.

An embodiment of a method of manufacturing a ceramic matrix composite includes forming a fiber preform, applying an aqueous solution to a fiber preform, freezing the fiber preform after applying the aqueous solution, freeze drying the fiber preform to remove water from the fiber preform, heating the fiber preform to remove a cryoprotectant from the fiber preform after freeze drying, and densifying the fiber preform after heating the fiber preform. The aqueous solution comprises water and the cryoprotectant. The fiber preform comprises a plurality of fiber tows and freezing the fiber preform spreads filaments within the plurality of fiber tows.

The method of manufacturing a ceramic matrix composite of the preceding paragraph can optionally include, additionally and/or alternatively, any one or more of the following features, configurations and/or additional components:
A method of manufacturing a ceramic matrix composite according to an exemplary embodiment of this disclosure includes, among other possible things, forming a fiber preform, applying an aqueous solution to a fiber preform, freezing the fiber preform after applying the aqueous solution, freeze drying the fiber preform to remove water from the fiber preform, heating the fiber preform to remove a cryoprotectant from the fiber preform after freeze drying, and densifying the fiber preform after heating the fiber preform. The aqueous solution comprises water and the cryoprotectant. The fiber preform comprises a plurality of fiber tows and freezing the fiber preform spreads filaments within the plurality of fiber tows.

A further embodiment of the foregoing method of manufacturing a ceramic matrix composite, wherein heating the fibrous composite comprises heating the fibrous composite to a temperature between 600F (316 °C) and 800F (427 °C), or between 600F (316°C) and 900F (482 °C).

A further embodiment of any of the foregoing methods of manufacturing a ceramic matrix composite, wherein the aqueous solution does not comprise inorganic material.

A further embodiment of any of the foregoing methods of method of manufacturing a ceramic matrix composite, wherein the aqueous solution further comprises a binder.

A further embodiment of any of the foregoing methods of manufacturing a ceramic matrix composite, wherein heating the fibrous composite after freeze drying further comprises removing the binder from the fibrous composite.

An embodiment of a ceramic matrix composite component manufactured according to any of the foregoing methods of manufacturing a ceramic matrix composite.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of spreading fiber tows (102), the method comprising:
assembling a fibrous composite (100) from a plurality of tows (102);
applying an aqueous solution to the fibrous composite (100), wherein the aqueous solution comprises water and a cryoprotectant;
freezing the fibrous composite (100) after applying the aqueous solution, wherein freezing the fibrous composite (100) spreads filaments (104) within the plurality of fiber tows (102);
freeze drying the fibrous composite (100) to remove water from the fibrous composite (100); and
heating the fibrous composite (100) after freeze drying to remove cryoprotectant from the fibrous composite (100).

2. The method of claim 1, wherein the fibrous composite (100) consists essentially of the plurality of filaments (104) following heating of the fibrous composite (100).

3. The method of claim 1 or 2, wherein the aqueous solution includes an inorganic component, wherein heating the fibrous composite (100) after freeze drying does not remove the inorganic component.

4. The method of any preceding claim, wherein the cryoprotectant comprises at least one of urea and dimethylsulfoxide.

5. The method of any preceding claim, further comprising densifying the fibrous composite (100) following heating.

6. The method of any preceding claim, wherein the fibrous composite (100) comprises a three-dimensional fibrous preform.

7. The method of any preceding claim, wherein applying the aqueous solution to the fibrous composite (100) comprises vacuum infiltrating the aqueous solution into the fibrous composite (100) or wherein applying the aqueous solution to the fibrous composite (100) comprises immersing the fibrous composite (100) in the aqueous solution.

8. The method of any preceding claim, wherein the fibrous composite (100) comprises one or more of a woven structure, a braided structure, and a unidirectional structure.

9. A fibrous composite (100) formed according to the method of any preceding claim.

10. A method of manufacturing a ceramic matrix composite, the method comprising:
forming a fiber preform;
applying an aqueous solution to a fiber preform, wherein:
the aqueous solution comprises water and a cryoprotectant;
the fiber preform comprises a plurality of fiber tows (102);
freezing the fiber preform after applying the aqueous solution, wherein freezing the fiber preform spreads filaments (104) within the plurality of fiber tows (102);
freeze drying the fiber preform to remove water from the fiber preform;
heating the fiber preform to remove cryoprotectant from the fiber preform after freeze drying; and
densifying the fiber preform after heating the fiber preform.

11. The method of any preceding claim, wherein heating the fibrous composite (100) or fiber preform comprises heating the fibrous composite (100) or fiber preform to a temperature between 600F (316 °C) and 900F (482 °C).

12. The method of any preceding claim, wherein the aqueous solution does not comprise inorganic material.

13. The method of any preceding claim, wherein the aqueous solution further comprises a binder.

14. The method of claim 13, wherein heating the fibrous composite (100) or fiber preform after freeze drying further comprises removing the binder from the fibrous composite (100) or fiber preform.

15. A ceramic matrix composite component manufactured according to the method of any of claims 10 to 14 .
